# EUROPEAN PATENT APPLICATION

(11) **EP 4 456 604 A1**
(43) Date of publication of application: **30.10.2024**
(21) Application number: 24172192.7
(22) Date of filing: 24.04.2024
(51) Int. Cl.: H04W 36/00, H04W 76/30, H04W 24/04, H04W 84/12

(54) **SYSTEMS FOR AND METHODS OF COMMUNICATION IN A NETWORK USING AN ACCESS HANDOFF**

(30) Priority: 28.04.2023 US 202318308788
(71) Applicant: Avago Technologies International Sales Pte. Limited, Singapore 768923 (SG)
(72) Inventor: Fratti, Roger, Irvine, 92618 (US); Bhat, Ashwini Shekhar, Irvine, 92618 (US)
(74) Representative: Dilg, Haeusler, Schindelmann Patentanwaltsgesellschaft mbH

(57) **Abstract**

Systems and methods use a protocol for handoff operations. A first device using the protocol includes a circuit configured to provide at least one frame across a connection to a second device in response to a pending failure. The frame includes data indicating at least one target access point for the second device.

## Description

### Copyright Statement

A portion of the disclosure of this patent document contains material that is subject to copyright protection. The copyright owner has no objection to the facsimile reproduction by anyone of the patent document or the patent disclosure as it appears in the Patent and Trademark Office patent file or records, but otherwise reserves all copyright rights whatsoever.

### Field of the Disclosure

This disclosure generally relates to systems for and methods of communication between an access point (AP) and a client device (e.g., a station (STA)) or between other communication devices. In some embodiments, this disclosure generally relates to systems for and methods of access handoff operations including but not limited to AP handoff operations. In some embodiments, this disclosure generally relates to systems for and methods of providing information during disassociation including but not limited to information that can reduce connection delays.

### Background of the Disclosure

In the last few decades, the market for wireless communications devices has grown by orders of magnitude, fueled by the use of portable devices, and increased connectivity and data transfer between all manners of devices. Digital switching techniques have facilitated the large scale deployment of affordable, easy-to-use wireless communication networks. Furthermore, digital and radio frequency (RF) circuit fabrication improvements, as well as advances in circuit integration and other aspects have made wireless equipment smaller, cheaper, and more reliable. Wireless communication can operate in accordance with various standards such as IEEE 802.11x, Bluetooth, global system for mobile communications (GSM), code division multiple access (CDMA), etc. As higher data throughput and other changes develop, newer standards are constantly being developed for adoption, such as a progression from IEEE 802.11n to IEEE 802.11ac.

The protocols for authenticating/deauthenticating and associating/disassociating connections can contribute to communication overhead. Switching from a first AP to second AP can be time consuming because the second AP generally needs to be discovered before authentication and association.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A is a block diagram depicting a network environment including one or more access points (APs) in communication with one or more devices or stations(STAs),, according to some embodiments.
FIGS. 1B and 1C are block diagrams depicting computing devices useful in connection with the methods and systems described herein, according to some embodiments.
FIG. 2A is a block diagram depicting a network including APs and STAs according to some embodiments.
FIG. 2B is a more detailed block diagram of an AP or STA of the network illustrated in FIG. 2A configured for a hand off operation according to some embodiments.
FIG. 2C is a more detailed block diagram of an AP or STA of the network illustrated in FIG. 2A configured for a disassociation or deauthentication operation according to some embodiments.
FIG. 3 is a flow diagram showing operations for a hand off operation for the network illustrated in FIG. 2A according to some embodiments.
FIG. 4 is a timing diagram showing communications including communications for a hand off operation for an AP and a client device according to some embodiments.
FIG. 5 is block diagram depicting a disassociation frame for use in the network illustrated in FIG. 2A according to some embodiments.
FIG. 6 is a timing diagram showing communications including communications for a disassociation operation for an AP and a client device according to some embodiments.

The details of various embodiments of the methods and systems are set forth in the accompanying drawings and the description below.

### Detailed Description

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a^{™}, IEEE 802.11b^{™}, IEEE 802.11g^{™}, IEEE 802.11be^{™}, IEEE P802.11n^{™}; and IEEE P802.11ac^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment which can be useful for practicing embodiments described herein; and
- Section B describes embodiments of protocols for handoff operations and methods and devices using such protocols.
- Section C describes embodiments of protocols for disassociation/deauthentication operations and methods and devices using such protocols.

Various embodiments disclosed herein are related to a protocol for handoff operations for devices communicating on a network. In some embodiments, a protocol is provided for a WiFi network (e.g., IEEE 802.11 network, etc.), a cellular network, point to point communications, or combinations thereof. The protocol can be a used with a Wi-Fi AP that monitors its own health in some embodiments. When a failure is about to occur or imminent, the AP proactively initiates a procedure to facilitate timely transfer of all supported basic service sets (BSSs) in some embodiments. The transfer or handoff can be to another AP in the network, to an AP outside the network, or to a non-AP device in some embodiments. The transfer or handoff can be to a device that is not in a WiFi network in some embodiments. In some embodiments, the transfer can be from a WiFi network to an LTE or other communication standard device or vice versa.

In some embodiments, a handoff operation may refer to an operation where a device is transferred from one AP to another AP. In some embodiments, the device is associated with a first AP (e.g., a connection is formed after discovery, authentication and association operations) and is associated with a second AP after the handoff operation. In some embodiments, a WiFi network may refer to wireless network that has Internet access. In some embodiments, a cellular network may refer to a radio network distributed over land through cells, where each cell includes a transceiver (e.g., a node or base station).

In some embodiments, systems and methods utilize a neighbor report to facilitate the hand off to adjacent APs in response to a pending failure. An AP unavailable bit or other information element (IE) in a beacon frame is set to indicate an AP will not accept new clients in some embodiments. The AP unavailable bit in a beacon frame is reset to indicate the AP will accept new clients in some embodiments. The AP unavailable bit is used to create a neighbor report in some embodiments. The neighbor report is provided to devices in the basic service set (BSS) from the AP. A neighbor report may refer to data provided from an AP that indicates the APs that are within the area of operation of the AP. The neighbor report can include AP addresses, AP availability, channel information, operational band information (e.g., 2G, 5G, 6G, 60G, LTE, etc.), location information, beam steering information, channel quality, etc. for each AP (e.g., AP target) within range.

In some embodiments, systems and methods inform client devices using a BSS transition management (BTM) request frame with a disassociate imminent bit set (e.g., for APs supporting 802.11v). The BTM request frame is provided by the home AP (the current AP connected to the devices). In some embodiments, systems and methods inform client devices using an unsolicited neighbor response with a new bit in a BSSID information IE showing a reason code as a predicted failure (e.g., for APs supporting 802.11k). In some embodiments, the predicted failure bit will be set to 0 for other use cases of the neighbor report. In some embodiments, the predicted failure bit will be set to 1 for last gasp functionality and the client device can parse this bit to understand if the AP is headed for failure. A broadcast message or broadcast frame may refer to a message or frame that is sent to more than one device in the BSS connected to or communicating with the AP in some embodiments. In some embodiments, the broadcast message or broadcast frame is sent to all the devices in the BSS connected to the AP.

In some embodiments, systems and methods provide an action frame (e.g., a predicted failure action (PFA) frame) or a predicted failure IE in extended capabilities in a beacon frame or probe response frame sent by the home AP. The action frame or IE contains an AP environment bit indicating if the environment is a single AP environment or multiple AP environment in some embodiments. For example, an AP environment bit equal to 0 indicates a multiple AP environment and the client device performs a scan to detect and connect to other APs (e.g., used mostly for non-802.11kvr APs). For example, an AP environment bit equal to 1 indicates a single AP environment and the client device can take a call to either scan for other saved or preferred networks or switch to a long term evolution (LTE) network for seamless connectivity. A single access point environment may refer to an environment where only one AP is present in some embodiments. A multi access point environment may refer to an environment where more than one AP is present in some embodiments.

A connection may refer to communication instituted between nodes (such as a wireless communication between nodes) for exchanging data according to a protocol in some embodiments. The phrase while a connection is being established may refer to a time period when a connection is being instituted in some embodiments. The time period may include the time when control frames such as those associated with discovery, authentication and/or association are being exchanged in some embodiments. In some embodiments, a connection is established using the three-way or four-way handshake mechanism (via discovery, authentication and association operations) in some embodiments. A secure connection may refer to a connection that provides data in a format that cannot easily be obtained by another party in some embodiments. Various methods can establish a secure connection including but not limited to a data encryption method. In some embodiments, data encryption employs algorithms that encrypt and decrypt the information, including but not limited to: WPA and WPA2 operations under the 802.11 standard (e.g., temporal key integrity protocol (TKIP) and advanced encryption standard (AES). The connection can be a wireless connections to or from a client device (e.g., a STA) and AP or can be between other types of communication devices. The wireless network can be an 802.11 WiFi network (e.g., IEEE 802.11be) in some embodiments. The client device or AP can be implemented in a device including one or more integrated circuits (ICs) packaged in an IC package.

An authentication operation may refer to a procedure for how a client device gains access to the network. Authentication provides proof of identity to ensure the client is allowed access to the network. An association operation may refer to a procedure for a client device that has been authenticated to become associated with an AP. Association allows the network to determine where to send data that is intended for a client device (e.g., data is sent through the AP with which the client device is associated). Generally, a client device is only associated with a single AP. A disassociation may refer to procedure where a client device is no longer associated with an AP in some embodiments. Disassociation prevents the AP from continuing to attempt to transmit data to the client device after the connection is cancelled in some embodiments. Disassociation generally involves the sending of a disassociation frame or message from the AP to the client device or from the client device to the AP in some embodiments. A client device can be disassociated from an AP while still maintaining authentication on the network. A deauthentication may refer to a procedure that disallows any further service to be provided to a client device in some embodiments. Deauthentication generally involves the sending of a deauthentication frame or message from the AP to the client device or from the client device to the AP in some embodiments.

In some embodiments, the systems and methods reduce discovery operations (e.g., discovering the AP using scanning for beacon signals or probe requests). A discovery operation may refer to the communication of frames for discovering the availability and/or identification (ID) of an AP or other wireless device in some embodiments. Discovery operations may involve the communication of probe request frames and probe response frames.

Some embodiments relate to a first device. The first device includes a circuit configured to provide at least one frame across a connection to a second device in response to a pending failure. The frame includes data indicating at least one target access point for the second device.

In some embodiments, the frame is provided according to an 802.11 protocol and the connection is established by using an association or authentication operation. In some embodiments, the frame includes a neighbor report response frame. In some embodiments, the frame includes an unsolicited neighbor report response frame. In some embodiments, the frame includes a basic service set transition management request frame. In some embodiments, the frame includes an unsolicited basic service set transition management request frame. In some embodiments, the circuit is configured to provide an indication of a multi AP or single AP environment across the connection to the second device in response to the pending failure. A target access point may refer to an AP that is recommended to a client device for a connection attempt in some embodiments. A target device may refer to a device that has an identification that is to be provided a STA for a connection attempt in some embodiments. A target device may be a recommended device for a connection attempt.

In some embodiments, the pending failure is determined in response to a bit error rate, a power fluctuation or drop, or a temperature change. In some embodiments, the pending failure is determined in response to a temperature increase. In some embodiments, the first device is part of an access point.

Some embodiments relate to an access point. The access point includes a circuit configured to provide an indication of a multi access point or single access point environment across a connection to a client device in response to a pending failure.

In some embodiments, the circuit is configured to provide at least one frame across the connection to the client device in response to the pending failure. The frame includes data indicating at least one target access point for the client device. In some embodiments, the frame is a broadcast frame. In some embodiments, the broadcast frame is provided as part of a handoff operation. In some embodiments, the indication is provided according to an 802.11 protocol and the connection is established by using an association or authentication operation.

Some embodiments relate to a method. The method includes determining a pending failure in a first device, and providing at least one frame across a connection from the first device to a second device in response to the pending failure. The frame includes data indicating at least one target device for the second device.

In some embodiments, the method also includes providing an indication of a multi access point or single access point environment across the connection to the second device in response to the pending failure. In some embodiments, the method also includes selecting the target device for association with the second device. In some embodiments, the method also includes associating with the target device. In some embodiments, the method also includes providing an indication of a multi access point or single access point environment across the connection to the second device in response to the pending failure. The connection is in an 802.11 network. In some embodiments, the method also includes associating with a node in a cellular network if the indication indicates the single access point environment.

A channel may refer to any portion of the electromagnetic spectrum used to communicate data. The portions can have various bandwidths and can be combined to form wider bandwidths or channels. Channels can have 5 MHz spacing about a center frequency and can occupy a band of at least 20 MHz in some embodiments. In some embodiments, the channels are in the 2G, 5G, 6G or 60 G bands. In some embodiments, the primary control channel is a common channel of operation for all stations (STAs) that are members of the basic service set (BSS). For example, in a 20 MHz, 40 MHz, 80 MHz, 160 MHz or 80+80 MHz, 320 MHz bandwidth BSS, the primary control channel is a 20 MHz channel. The primary control channel is used for transmitting all the management frames. A primary control channel may refer to any channel used to send and receive management frames including but not limited to beacon frames, probe request/response frames, authentication request/response frames, association request/response frames, deauthentication frames, disassociation frames, etc.

Authentication and association under 802.11 standards provides a method for supplying different levels of access to client devices in a network in some embodiments. Connection between an AP and a STA is generally authenticated and associated with an AP before data packets can be exchanged using the connection in some embodiments.

A frame may refer to a digital data transmission unit in some embodiments. For example, a frame may refer to a container for a single network packet. A data frame may refer to a frame that contains data in some embodiments. An encrypted frame may refer to a frame that has been encrypted in some embodiments.

Various embodiments disclosed herein are related to a protocol for disassociation operations for devices communicating on a network. In some embodiments, a protocol is provided for a WiFi network (e.g., IEEE 802.11 network, etc.), a cellular network, point to point communications, or combinations thereof. The protocol can be used to provide enhanced disassociation in some embodiments. Enhanced disassociation can involve the provision of information during disassociation from an AP to a client device so that the client device can use the information to reduce connection delays. The information can be used to transfer or handoff to another AP in the network, to an AP outside the network, or to a non-AP device in some embodiments. The transfer or handoff can be to a device that is not in a WiFi network in some embodiments. In some embodiments, the transfer can be from a WiFi network to an LTE or other communication standard device or vice versa.

APs can disassociate client devices for various reasons. Once the disassociation happens, the client device generally scans available channels and looks for a list of viable APs for a connection. The full scan may take up to 2 seconds based on the driver implementation. In some embodiments, systems and methods provide a protocol where the AP informs the client devices of a list of viable targets at a disassociation or deauthentication operation, thereby reducing the number of scans performed by the client device. Without the list, the client device generally starts scans to all the possible channels allowed by the country, and may or may not be able to find viable targets for connection (e.g., to roam to). Once the roam fails, the device starts to scan other targets if a fresh association is not issued by the upper layers.

In some embodiments, systems and methods utilize a neighbor report to provide a list of viable APs to the client device during disassociation. In some embodiments, STAs send the APs the list of targets detected via beacon reports when requested by the AP, and the APs maintain a list of viable targets within its vicinity. The APs informs the client devices of these APs through neighbor reports. In some embodiments, the systems and methods append the neighbor report information element (IE) to a disassociation frame, so that the STA can make an informed decision to roam to a viable list of targets suggested by the AP, thereby providing a better chance for STA to find a target and be associated with an AP in a shorter time. In some embodiments, the systems and methods can reduce the time taken to find a target after disassociation, by having the STA scan the list of targets provided by the AP, thereby achieving faster connection and seamless connectivity for the user. In some embodiments, if association with the suggested targets fails, the client device can fall back to a mechanism that scans all channels to find a target AP. (e.g., in accordance with an IEEE 802.11 protocol.

In some embodiments, systems and methods inform client devices of the target APs using a disassociation frame, a deauthentication frame or a BSS transition management (BTM) request frame with a disassociate imminent bit set (e.g., for APs supporting 802.11v). A disassociation frame may refer to a frame that indicates an AP or STA is disassociating the STA from the AP in some embodiments. The disassociation frame can be provided as part of a disassociation operation in some embodiments. A deauthentication frame may refer to a frame that indicates an AP or STA is terminating a connection between the STA and the AP in some embodiments. The deauthentication frame can be provided as part of a deauthentication operation in some embodiments. The BTM request frame is provided by the home AP (the current AP connected to the devices).

In some embodiments, systems and methods provide a disassociation frame or a deauthentication frame with an IE in extended capabilities in a beacon frame or probe response frame sent by the home AP. The IE of the disassociation frame or a deauthentication frame contains an AP environment bit indicating if the environment is a single AP environment or multiple AP environment in some embodiments. For example, an AP environment bit equal to 0 indicates a multiple AP environment and the client device performs a scan to detect and connect to other APs (e.g., used mostly for non-802.11kvr APs). For example, an AP environment bit equal to 1 indicates a single AP environment and the client device can take a call to either scan for other saved or preferred networks or switch to a long term evolution (LTE) network for seamless connectivity. A single access point environment may refer to an environment where only one AP is present in some embodiments. A multi access point environment may refer to an environment where more than one AP is present in some embodiments.

In some embodiments, the systems and methods provide a better chance of successful joins / roams, as the device is aware of the neighboring APs and can find a qualifying target with a targeted scan to the APs in the disassociation frame within a short time. The systems and methods can provide better utilization of the channel (especially when the channel is congested), with increase in medium availability due to reduction in frames from the AP end as well as reduction in power consumption on the client end as there are targeted channels to be scanned after disassociation.

Some embodiments relate to a first device including a circuit configured to provide at least one frame across a connection to a second device during a disassociation operation or deauthentication operation. The frame includes data indicating at least one target access point for the second device.

In some embodiments, the frame is provided according to an 802.11 protocol and the connection is established by using an association or authentication operation. In some embodiments, the frame is a disassociation frame or a deauthentication frame. In some embodiments, the frame comprises a basic service set transition management (BTM) request frame. In some embodiments, the frame is a disassociation frame. In some embodiments, the frame is a deauthentication frame.

In some embodiments, at least one frame provides an indication of a multi AP or single AP environment. In some embodiments, the first device is configured as an access point. In some embodiments, the second device is configured as a mobile client device. In some embodiments, the data indicates a capability of at least one target access point.

Some embodiments relay to a first device including circuit configured to provide at least one disassociation frame or a deauthentication frame across a connection to a second device. The at least one disassociation frame or deauthentication frame includes data indicating at least one target access point for the second device.

In some embodiments, the at least one disassociation frame or deauthentication frame is the disassociation frame. In some embodiments, the at least one disassociation frame or deauthentication frame is the deauthentication frame. In some embodiments, the circuit is configured to provide at least one basic service set transition management (BTM) request frame across the connection to the second device, the basic service set transition management (BTM) request frame comprising the data indicating the at least one target access point for the second device. In some embodiments, the at least one disassociation frame or deauthentication frame is provided according to an 802.11 protocol and the connection is established by using an association or authentication operation.

Some embodiments relate to a method. The method includes providing data indicating at least one target device for a second device, and providing at least one frame across a connection from a first device to the second device in a disassociation operation or deauthentication operation. The frame includes the data indicating at least one target device for the second device.

In some embodiments, the method further includes providing an indication of a multi access point or single access point environment across the connection to the second device, wherein the at least one frame comprises the indication. In some embodiments, the method further includes selecting the target device for association with the second device. In some embodiments, the method further includes associating the first device with the target device. In some embodiments, the frame is at least one of a disassociation frame or a deauthentication frame.

Circuitry or circuit may refer to any electronic circuit or combination of circuits. To the extent that a device, circuit, processor or circuitry is described or recited in a claims as performing one or more operations or functions or as configured to perform to one or more operations or functions, the performance of the recited function(s) or operation(s) can be distributed across two or more devices, circuits, or processors without departing from the scope of the claims unless those functions or operations are explicitly recited as being performed on a specific single circuit or set of circuits, processor, or device (e.g. using the phrase "on a single circuit", "on the set of circuits comprising" or "on a single device").

### A. Computing and Network Environment

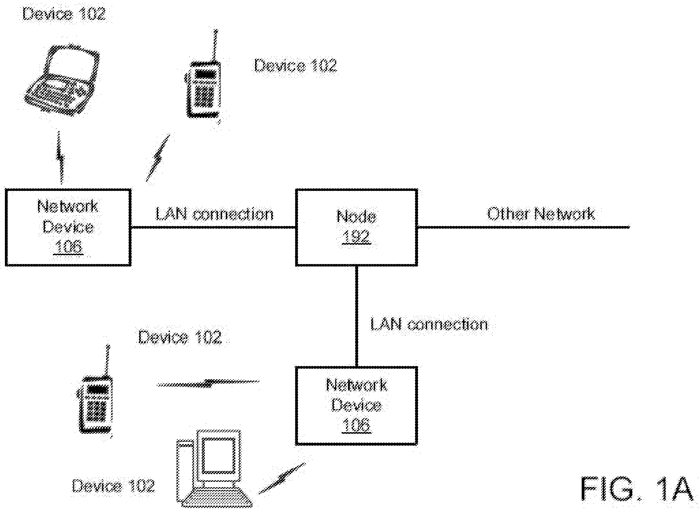

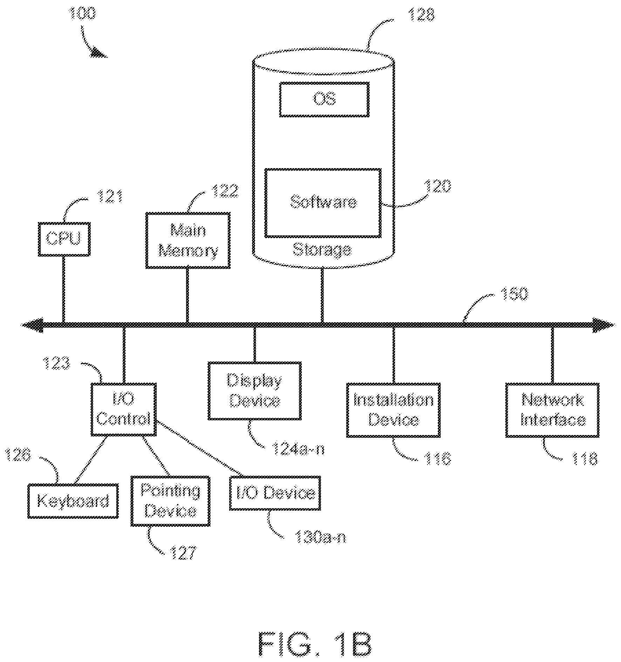

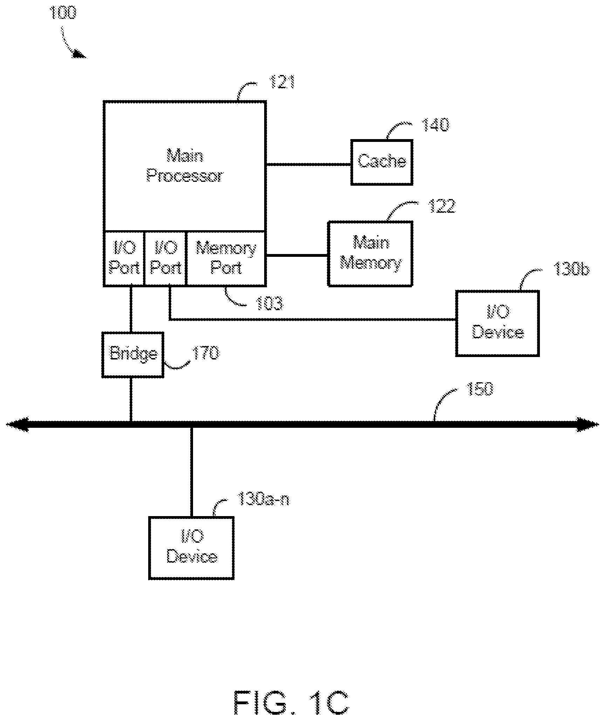

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more client devices (e.g., STAs) or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus (e.g., system bus 150). Various buses can be used to connect the central processing unit or processor 121 to any of the I/O devices 130, for example, a VESA VL bus, an ISA bus, an EISA bus, a Micro Channel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, track pads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a Fibre Channel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Client Device and AP Handoff Operations

Disclosed herein are systems and methods that can be used in any communication system including but not limited to Wi-Fi and LTE networks. The systems and methods can be used with an AP or STA in a communication network such as the devices discussed with reference to FIGS. 1A-C. Although embodiments of handoff operations for communications under the IEEE 802.11 standard are described herein, the systems and methods can be used with other networks (e.g., cellular networks) and in point to point communications.

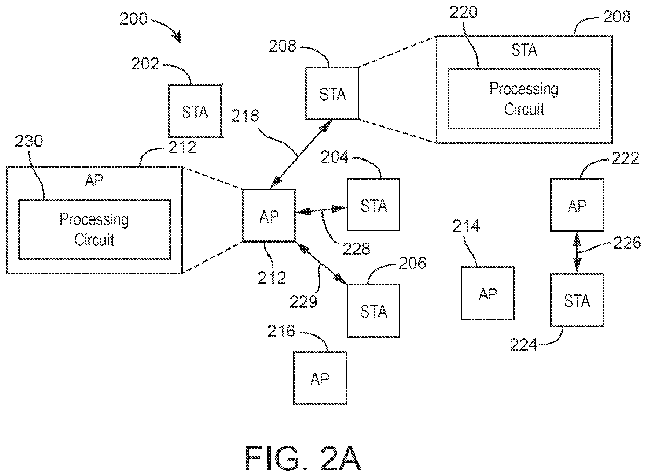

With reference to FIG. 2A, a wireless communication network or system 200 includes client devices or STAs 202, 204, 206, 208, and 224 and APs 212, 214, 216, and 222. STAs 202, 204, 206, 208, and 224 and APs 212, 214, 216, and 222 can be used in the systems discussed with reference to FIGS. 1A-C. Any number of STAs 202, 204, 206, 208, and 224 and APs 212, 214, 216, and 222 can be used in the network or system 200. A STA or client device may refer to any device for communicating in communication system and includes but is not limited to a fixed, portable, or mobile laptop, desktop personal computer, personal digital assistant, work station, wearable device, smart phone, or Wi-Fi phone in some embodiments. An access point or AP may refer to a device for communicatively coupling one or more non-AP devices (e.g., a client device or STA) to a network in some embodiments. An AP may enable non-AP devices to connect and communicate with a network in some embodiments. In some embodiments, an AP is a wireless access point (WAP) configured to enable wireless communication between non-AP devices. An AP includes but is not limited to a mobile, portable, or fixed hot spot, router, bridge, gNB node, eNodeB, evolved node B, or other communication device. An AP can provide services to a STA, such as serving as a connection point to another network.

STAs 202, 204, 206, 208, and 224 and APs 212, 214, 216, and 222 can each include a wireless transceiver and a various modules for communicating via connections. The modules can be software (e.g., firmware), hardware components, and combinations thereof. In some embodiments, each of STAs 202, 204, 206, 208, and 224 and APs 212, 214, 216, and 222 includes an IEEE 802.11 conformant media access control (MAC) layer circuit and physical (PHY) layer interface to the wireless medium and can be part of a larger device or system. In some embodiments, each of STAs 202, 204, 206, 208, and 224 and APs 212, 214, 216, and 222 operates according to other standards than the IEEE 802.11 standard.

A connection for wireless communication can be established between at least one of STAs 202, 204, 206, 208, and 224 and APs 212, 214, 216, and 222 after authentication and association operations. For example, STA 208 has a connection 218 to AP 212. STAs 202, 204, 206, 208, and 224 each include circuitry (e.g., a processor or processing circuit 230), and APs 212, 214, 216, and 226 each include circuitry (e.g., a processing circuit 231) for establishing and cancelling the connection 218 and communicating data across the connection. In another example, STA 204 has a connection 228 to AP 212, and STA 206 has a connection 229 to AP 212. In yet another example, STA 224 has a connection 226 to AP 222. STAs 202, 204, 206, 208, and 224 each include circuitry (e.g., a processor or processing circuit 230), and APs 212, 214, 216, and 222 each include circuitry (e.g., a processing circuit 231) for operating according to handoff operations as described below. The connections 218, 228, 229 and 226 are wireless connections formed using an association and/or authorization operation and cancelled using a disassociation and/or deauthentication operation in some embodiments. The connections 218, 228, 229 and 226 can be single link, multilink or dual link connections associated with APs 212 and 222 and can be a secure connection (e.g., using encryption) in some embodiments. In some embodiments, the connections 218, 228, 229 and 226 provide data communications and control and management communications on one or more channels in a 5G, 6G, 60G, or 2G band.

In some embodiments, STAs 202, 204, 206, 208, and 224 and APs 212, 214, 216, and 222 are configured to use a neighbor report to facilitate hand off operations to adjacent APs 212, 214, 216, and 222 in response a pending failure of an AP. Under normal operating conditions, APs 212, 214, 216, and 222 are functional and handling communications with STAs 202, 204, 206, 208, and 224. For example, AP 212 has connections 218, 228, and 229 with STAs 204, 206 and 208. When AP 212 determines that AP 212 is undergoing a pending failure, AP 212 relays a neighbor report or neighbor information to STAS 204, 206 and 208 recommending new APs such as APs 214, 216, and 222.

A pending failure may refer to an expected or actual inability to maintain a connection at an adequate quality. A pending failure may include an actual fault or malfunction which prevents an AP from operating appropriately as well as a prediction of such a failure in some embodiments. The pending failure may be indicated by numerous factors including but not limited to an increase in bit error rate (BER), an increase in packet error rate (PER), a decreasing signal to noise ratio (SNR), an internal oscillation detection, a power fluctuation or droop, or a temperature increase. The pending failure may be indicated by factors including but not limited to a bit error rate (BER) being above a threshold, packet error rate (PER) being above a threshold, SNR being below a threshold, a power fluctuation failure, or a temperature being above a threshold in some embodiments. A pending failure can be due to a problem associated with the medium, with the environment, with the power supply, with the AP, or with a network connected to the AP in some embodiments.

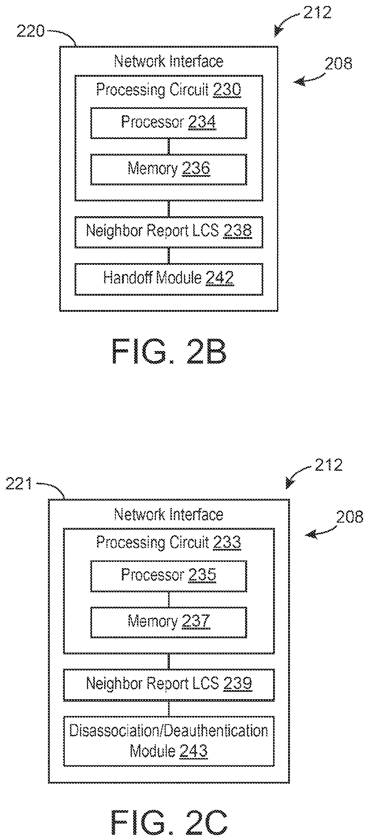

Referring to FIG. 2B, a device 220 is an AP 212 or STA 208 (FIG. 2A) and is configured for handoff operations according to some embodiments. In some embodiments, device 220 includes a processing circuit 232, a neighbor report module 238, and a handoff module 242. The processing circuit 232 is any circuitry or components that can perform logic and communication processing operations and can include a processor 234 and a memory 236 in some embodiments.

In some embodiments, the processing circuit 232 is implemented as a field-programmable gate array, an application-specific integrated circuit, hardware, a software executing processor, or state machines. In some embodiments, the processing circuit 232 is part of layers (e.g., MAC, network, PHY layers) of IEEE 802.11 standard devices. The processing circuit 232 can be configured to perform communication operations, frame building and processing, discovery operations, association operations, authorization operations, connection setup, disassociation operations, handoff operations, and deauthentication operations in some embodiments. Instructions for the processing circuit 232 are stored in a non-transitory medium such as memory 236 in some embodiments. Processing circuit 230 of STA 208 and processing circuit 231 of AP 212 are similar to processing circuit 232 in some embodiments.

The memory 236 may be one or more devices (e.g., RAM, ROM, Flash memory, hard disk storage) for storing data and/or computer code for completing and/or facilitating the various processes described herein. The memory 236 may be or include non-transient volatile memory, non-volatile memory, and non-transitory computer storage media. Memory 236 may include database components, object code components, script components, or any other type of information structure for supporting the various activities and information structures described herein. Memory 236 may be communicably coupled to the processor 234 and include computer code or instructions for executing one or more processes described herein. The processor 234 may be implemented as one or more application specific integrated circuits (ASICs), field programmable gate arrays (FPGAs), a group of processing components, a software executing processor, state machines or other suitable electronic processing components. As such, AP or network device 106 (FIG. 1A) is configured to execute a variety of modules and/or programs and store associated data in a database of the memory 236. The modules (e.g., modules 238 and 242) can be implemented in AP software (e.g., MAC layer or PHY layer software) or STA software (e.g., MAC layer or PHY layer software). In some embodiments, the AP 212 or STA 208 (FIG. 2A) is structured and used to establish connections and hand off access to other computing systems and devices (e.g., wireless communication device(s) 102, network hardware 192, other access points or network devices 106, (FIGS. 1A-C) via a network (e.g., WAN connection, LAN connection, WLAN connection, etc.).

In some embodiments, processing circuit 232 includes a neighbor report module 238. The neighbor report module 238 can be configured to communicatively couple with one or more APs 212, 214, 216, and 222 (FIG. 2A)) and can be configured to determine which APs 212, 214, 216, and 222 are available for connections to STAs 202, 204, 206, 208, and 224. In particular, the neighbor report module 238 can be configured to determine if an AP environment bit equal to 0 indicating a multi AP environment and the STAs 202, 204, 206, 208, and 224 can performs a scan to detect and connect to other APs if the neighbor report indicates a multi AP environment. The neighbor report module 238 can also be configured to determine if an AP environment bit is equal to 1 indicating a single AP environment and the STAs 204, 206, 208, and 224 can take a call to either scan for other saved or preferred networks or switch to LTE for seamless connectivity if the neighbor report indicates a single AP environment. The neighbor report module 238 can be configured to determine if the AP environment bit should be set to 1 to 0 and send the bit from the AP (from AP 212 to other APs 212, 214, 216, and 222). For example, the neighbor report module 238 can produce the neighbor reports in response to information received from other STAs.

In some embodiments, the neighbor report module 238 can be configured to provide a neighbor report in response to a neighbor report request sent from one or more of STAs 202, 204, 206, 208, and 224 to one or more APs 212, 214, 216, and 222. The neighbor report includes information about neighboring APs 212, 214, 216, and 222 that are known candidates for STAs 202, 204, 206, 208, and 224 to re-associate. The neighbor report provides information about the neighboring APs 212, 214, 216, and 222 of the AP that is currently associated to one or more of STAs 202, 204, 206, 208, and 224, and this information may be used as identification of potential candidates for a new point of attachment while roaming. The neighbor report can be provided in response to a pending failure of one or more APs 212, 214, 216, and 222. The neighbor report can reduce delays associated with scanning for available APs 212, 214, 216, and 222 (either reducing actively probing for APs or passively listening to every channel for beacon frames). STAs 202, 204, 206, 208, and 224 can instead narrow the list of potential APs down to the known available APs using the neighbor report which is especially useful in high density environments where multiple WLANs can be heard by STAs 202, 204, 206, 208, and 224. In some embodiments, the use of the neighbor report also reduces power consumption by STAs 202, 204, 206, 208, and 224 (e.g., due to scanning) and allows more efficient use of the mediums of STAs 202, 204, 206, 208, and 224.

An example neighbor report can include the following IEs listed in Table 1 below.

**Table 1 -Neighbor Report Information**

| byte | function | value | description |
|---|---|---|---|
| 1 | Element ID | Fixed | Identifies Neighbor Report IE |
| 2 | Length | Variable | Depends on the number and length of optional sub-elements, minimum = 13 (decimal) if no optional sub-elements are present |
| 3-8 | BSSID | Variable | MAC address of AP client is being advised to associate to |
| 9-12 | BSSID Information | Variable | Includes reachability of AP, security, capabilities of AP, mobility domain of the AP indicated by this BSSID |
| 13 | Operating Class | Variable | Operating Class indicates the channel set of the AP indicated by this BSSID. Country, Operating Class, and Channel Number together specify the channel |
| | | | frequency and spacing for the AP indicated by this BSSID. |
| 14 | Channel No. Variable | Channel | Number indicates the last known operating channel of the AP indicated by this BSSID. |
| 15 | PHY Type Variable | The PHY | Type field indicates the PHY type of the AP indicated by this BSSID. |
| 16 | Optional Sub-elements | Variable | |

Module 238 can be any circuit or circuitry (with or without software) configured to create, provide, process, interpret, or request a neighbor report or information for the neighbor report.

In some embodiments, the handoff module 242 is configured to implement a handoff protocol. In some embodiments, the module 242 causes device 220 to determine if the device 220 is experiencing a pending failure. The handoff module 242 can monitor various parameters to determine a pending failure. The parameters can include bit error rate (BER), packet error rate (PER), a decreasing signal to noise ratio (SNR), an internal oscillation detection, a power fluctuation or droop, channel quality across one or more channels, or temperature. In some embodiments, the parameters are compared to thresholds. In some embodiments, the thresholds are at level where the communication is not efficient. In some embodiments, the thresholds can be related to signal quality (e.g., signal to noise ratio, number of dropped packets, signal strength (root mean squared signal strength indicator (RSSI), error correction parameters, etc.). In some embodiments, the thresholds can represent a fixed value or a rate of change.

In some embodiments, the pending failure can be anticipated by processor circuit 230 monitoring an external temperature diode. Data can extrapolated to predict an over temperature event based on the current ambient temperature and internal performance parameters of the processor or other components in the system. For example, power supplies for processing circuit 230 monitor and control current into their separate cores and can use current and power data to extrapolate thermal rise. Extrapolation of anticipated thermal rise may trigger the unsolicited transmission of the last gasp handoff information in some embodiments. The diode can be internal or external to the processing circuit 230.

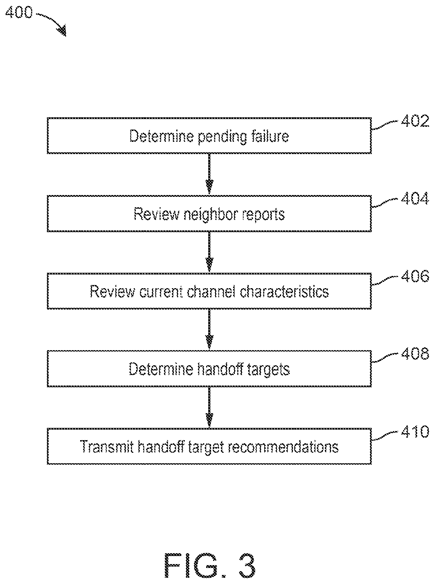

With reference to FIGS. 2A-B and 3, AP 212 can operate according to a flow 400 where all APs 212, 214, 216, and 222 are functional and handling communications with STAs 202, 204, 206, 208, and 224. At an operation 402, AP 212 determines that it is failing or has a pending failure using handoff module 242. Determination of a pending failure can be triggered by numerous factors including increase BER, PER, SNR, internal oscillation detection, power fluctuation or droop, temperature, etc.

At an operation 404, neighbor report module 238 of AP 212 reviews information about status of APs 214, 216, and 222 (e.g., availability and operating parameters). The information can be in a form of neighbor reports provided by APs 214, 216, and 222. At an operation 406, neighbor report module 238 of AP 212 determines current channel characteristics of STAS 204, 206 and 208. The channel characteristics can include SNR, directional beam forming information, RSSI, etc.). At an operation 408, handoff module 242 of AP 212 determines the best or suitable APs of APs 214, 216, and 226 for a handoff operation for each of STAs 204, 206, and 208. The determination of the best or suitable APs is made using the information associated with operations 404 and 406 in some embodiments. For example, handoff module 242 of AP 212 can use channel quality, operational capabilities, location, beam forming information, availability information, capacity information to select an AP. A comparison of information from operations 404 and 406 can be used to determine a suitable or best match for one of APs 214, 216, and 226 with one of STAs 204, 206, and 208 for the handoff operation in some embodiments.

At an operation 410, handoff module 242 of AP 212 provides a list containing one or more of the best or suitable APs 214, 216, and 222 to STAs 204, 206, and 208. The list can be provided in a frame (e.g., a control frame). The list can be part of or integrated with a neighbor report. The best or suitable APs may include an AP associated with a different type of network (e.g., a cellular AP or node). STAs 204, 206, and 208 can use the list to select an AP with which to establish a connection. In some embodiments, the handoff protocol allows STAS 204, 206, and 208 to connect in a non-heuristic fashion where the STAS 204, 206, and 208 do not need to wait for a loss of a connection before seeking a target AP.

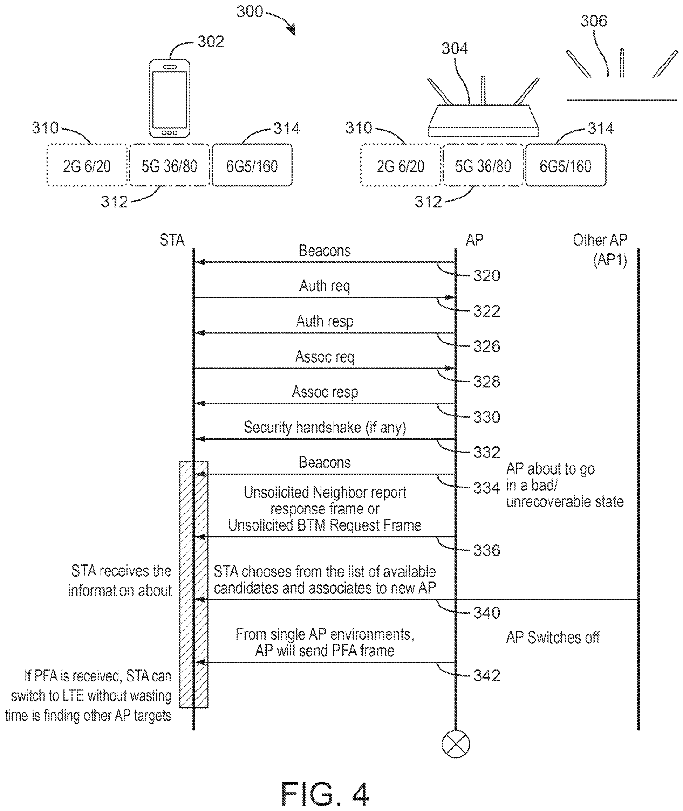

With reference to FIG. 4, a client device 302 (e.g., one STAs 204, 206, and 208 in FIG. 2A) is in communication with an AP 304 (e.g., one of APs 212, 214, 216, and 226 in FIG. 2A). In some embodiments, client device 302 and AP 304 communicate in the 2G, 5G and 6G bands. In some embodiments, client device 302 and AP 304 communicate on various channels including but not limited to a channel 310 (channel 6, 20MHz bandwidth, in the 2G band), a channel 312 (channel 36, 80MHz bandwidth, in the 5G band), and a channel 314 (channel 5, 160MHz bandwidth, in the 6G band). Client device 302 and AP 304 perform a discovery operation, an authorization and association operation, and a security and power management operation in some embodiments.

In some embodiments, AP 304 provides a beacon frame in an operation 320, and client device 302 provides an authorization request in an operation 322. In some embodiments, AP 304 provides an authorization response in an operation 326, and client device 302 provides an association request in an operation 328. In some embodiments, AP 304 provides an association response in an operation 330, and a security handshake in an operation 332. After operation 332 or 334, AP 304 and client device 302 have established a connection.

In an operation 334, AP 304 sends beacon frames to client device 302. Between operation 334 and 336, AP 304 determines a pending failure (e.g., AP 304 is about to enter an unrecoverable state or state of where a sufficient quality connection cannot be maintained). In an operation 336, AP 304 provides an unsolicited neighbor report response frame or unsolicited BTM frame to client device 302. A neighbor report response frame may refer to a frame including a neighbor report or portion thereof (e.g., a list of AP targets) in some embodiments. An unsolicited neighbor report may refer to information sent about neighbor APs which is not sent in response to a request for such information in some embodiments. A basic service set transition management request frame may refer to a frame including a list of AP targets in some embodiments. An unsolicited basic service set transition management request frame may refer to a BTM request frame which is not sent in response to a request for such a frame in some embodiments.

In an operation 340, client device 302 selects a target AP (e.g., AP 306) using the information (e.g., list of AP targets) in the unsolicited neighbor report response frame or unsolicited BTM frame and AP 304 switches off. Client device 302 establishes a connection with AP 306 using an authentication and association operation in some embodiments.

In a single AP environment, AP 304 sends an unsolicited predictive failure action (PFA) frame indicating a single AP environment in operation 342 and switches off in an operation 342. Client device 302 switches to a different network (e.g., from WiFi to LTE) without waiting or attempting to find other AP targets in response to the unsolicited predictive failure action (PFA) frame indicating a single AP environment. In multi AP environment, AP 304 sends an unsolicited predictive failure action (PFA) frame indicating a multi AP environment in operation 342 and client device 302 seeks other APs in same type of network before switching to a different type of network in response to the unsolicited predictive failure action (PFA) frame indicating a multi AP environment. An unsolicited predictive failure action frame may refer to a PFA frame sent without a request for such a frame in some embodiments.

Device 220 can operate according to exemplary pseudo code below. The pseudo code is disclosed as an example and not in a limiting fashion.

```
Pseudo code:
          ap_watchdog_fn()
          {
          /* Sanity failure can include multiple factors as explained above */
             sanity_failure() {
                    if (multi_ap_environment) {
          #ifdef 802.11v_supported
                          send_btm_request_frame();
          #elseif 802.11k_supported
                          send_unsolicited_neighbor_report_response();
          #else
                          send_predicted failure action frame(AP environment bit= 1);
          } else {
             send_predicted failure action frame(AP environment bit= 0);
          }
             }
          }
```

### C. Client Device and Disassociation/Deauthentication Operations

Disclosed herein are systems and methods that can be used in any communication system including but not limited to Wi-Fi and LTE networks. The systems and methods can be used with an AP or STA in a communication network such as the devices discussed with reference to FIGS. 1A-C. Although embodiments of handoff operations for communications under the IEEE 802.11 standard are described herein, the systems and methods can be used with other networks (e.g., cellular networks) and in point to point communications.

In some embodiments, STAs 204, 206, 208, and 224 and APs 212, 214, 216, and 222 are configured to use a neighbor report provided with a disassociation frame or a deauthentication frame to facilitate hand off operations to adjacent APs 212, 214, 216, and 222. Under normal operating conditions, APs 212, 214, 216, and 222 are functional and handling communications with STAs 204, 206, 208, and 224. For example, AP 212 has connections 218, 228, and 229 with STAs 204, 206 and 208. When AP 212 determines that a disassociation frame, or a deauthentication frame must be sent, AP 212 relays a neighbor report or neighbor information to STAS 204, 206 and 208 recommending new APs such as APs 214, 216, and 222. The neighbor report or neighbor information (e.g., list of target APs and information about the target APs) is part of the disassociation frame or deauthentication frame. The disassociation frame, deauthentication frame or BSS transition management (BTM) request frame can be provided in response to a pending failure.

Referring to FIG. 2C, a device 221 is an AP 212 or STA 208 (FIG. 2A) and is configured for providing an AP target list according to some embodiments. In some embodiments, device 221 includes a processing circuit 233, a neighbor report module 239, and a disassociation/deauthentication module 243. The processing circuit 233 is any circuitry or components that can perform logic and communication processing operations and can include a processor 235 and a memory 237 in some embodiments.

In some embodiments, the processing circuit 233 is implemented as a field-programmable gate array, an application-specific integrated circuit, hardware, a software executing processor, or state machines. In some embodiments, the processing circuit 233 is part of layers (e.g., MAC, network, PHY layers) of IEEE 802.11 standard devices. The processing circuit 233 can be configured to perform communication operations, frame building and processing, discovery operations, association operations, authorization operations, connection setup, disassociation operations, handoff operations, and deauthentication operations in some embodiments. Instructions for the processing circuit 233 are stored in a non-transitory medium such as memory 237 in some embodiments. Processing circuit 230 of STA 208 and processing circuit 231 of AP 212 are similar to processing circuit 233 in some embodiments.

The memory 237 may be one or more devices (e.g., RAM, ROM, Flash memory, hard disk storage) for storing data and/or computer code for completing and/or facilitating the various processes described herein. The memory 237 may be or include non-transient volatile memory, non-volatile memory, and non-transitory computer storage media. Memory 237 may include database components, object code components, script components, or any other type of information structure for supporting the various activities and information structures described herein. Memory 237 may be communicably coupled to the processor 235 and include computer code or instructions for executing one or more processes described herein. The processor 235 may be implemented as one or more application specific integrated circuits (ASICs), field programmable gate arrays (FPGAs), a group of processing components, a software executing processor, state machines or other suitable electronic processing components. As such, AP or network device 106 (FIG. 1A) is configured to execute a variety of modules and/or programs and store associated data in a database of the memory 237. The modules (e.g., modules 239 and 243) can be implemented in AP software (e.g., MAC layer or PHY layer software) or STA software (e.g., MAC layer or PHY layer software). In some embodiments, the AP 212 or STA 208 (FIG. 2A) is structured and used to establish connections and hand off access to other computing systems and devices (e.g., wireless communication device(s) 102, network hardware 192, other access points or network devices 106, (FIGS. 1A-C) via a network (e.g., WAN connection, LAN connection, WLAN connection, etc.).

In some embodiments, processing circuit 233 includes a neighbor report module 239. The neighbor report module 239 can be configured to communicatively couple with one or more APs 212, 214, 216, and 222 (FIG. 2A)) and can be configured to determine which APs 212, 214, 216, and 222 are available for connections to STAs 202, 204, 206, 208, and 224. In particular, the neighbor report module 239 can be configured to determine if an AP environment bit equal to 0 indicating a multi AP environment and the STAs 202, 204, 206, 208, and 224 can performs a scan to detect and connect to other APs (e.g., used mostly for non-802.11kvr APs) if the neighbor report indicates a multi AP environment. The neighbor report module 239 can also be configured to determine if an AP environment bit is equal to 1 indicating a single AP environment and the STAs 202, 204, 206, 208, and 224 can take a call to either scan for other saved or preferred networks or switch to LTE for seamless connectivity if the neighbor report indicates a single AP environment. The neighbor report module 239 can be configured to determine if the AP environment bit should be set to 1 to 0 and send the bit from the AP (from AP 212 to other APs 212, 214, 216, and 222). For example, the neighbor report module 239 can produce the neighbor reports in response to information received from other STAs.

In some embodiments, the neighbor report module 239 can be configured to provide a neighbor report in response to a neighbor report request sent from one or more of STAs 202, 204, 206, 208, and 224 to one or more APs 212, 214, 216, and 222. The neighbor report includes information about neighboring APs 212, 214, 216, and 222 that are known candidates for STAs 202, 204, 206, 208, and 224 to re-associate. The neighbor report provides information about the neighboring APs 212, 214, 216, and 222 of the AP that is currently associated to one or more of STAs 202, 204, 206, 208, and 224, and this information may be used as identification of potential candidates for a new point of attachment while roaming. The neighbor report can be provided in response to a pending failure of one or more APs 212, 214, 216, and 222. The neighbor report can reduce delays associated with scanning for available APs 212, 214, 216, and 222 (either reducing actively probing for APs or passively listening to every channel for beacon frames). STAs 202, 204, 206, 208, and 224 can instead narrow the list of potential APs down to the known available APs using the neighbor report which is especially useful in high density environments where multiple WLANs can be heard by STAs 202, 204, 206, 208, and 224. In some embodiments, the use of the neighbor report also reduces power consumption by STAs 202, 204, 206, 208, and 224 (e.g., due to scanning) and allows more efficient use of the mediums of STAs 202, 204, 206, 208, and 224.

An example neighbor report can include the following IEs listed in Table 1 above. Module 239 can be any circuit or circuitry (with or without software) configured to create, provide, process, interpret, or request a neighbor report or information for the neighbor report.

In some embodiments, the disassociation/deauthentication module 243 is configured to implement a disassociation operations, deauthentication operations. In some embodiments, the module 243 causes device 221 to provide the neighbor report or neighbor information (e.g., list of target APs and information about the target APs) as part of the disassociation frame, deauthentication frame.

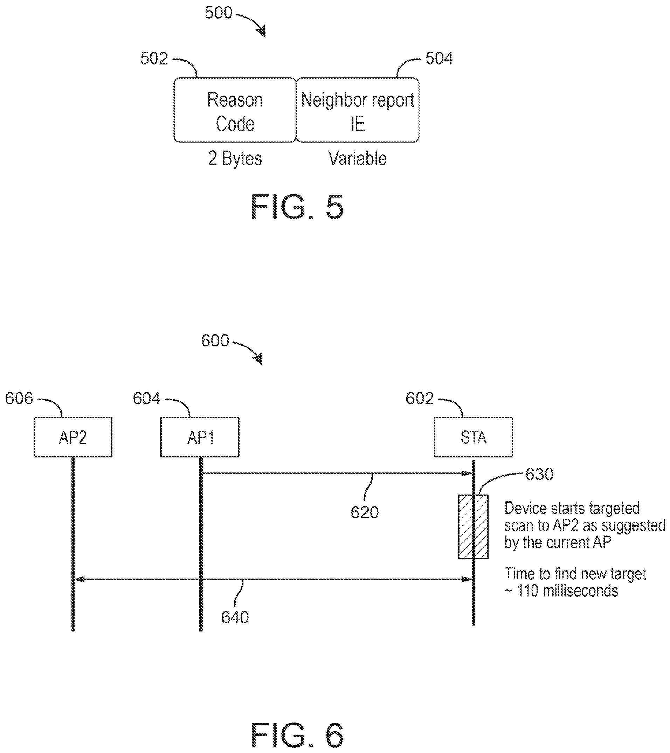

With reference to FIG. 5, a disassociation frame 500 includes a reason code 502 and a neighbor report 504. Reason code 502 has a two byte length, and neighbor report 504 has available byte length. A deauthentication frame can have similar structure with a reason code and the neighbor report. Neighbor report 504 can be created using the techniques and protocols discussed above (e.g., discussed above with reference to FIG. 4). Disassociation/deauthentication module 243 of AP 212 can provide a list containing one or more of the best or suitable APs 214, 216, and 226 to STAs 204, 206, and 208 as neighbor report 504 in some embodiments. The report can include a multi AP environment IE and a capabilities IE for each target AP listed.

With reference to FIG. 6, a client device 602 (e.g., one STAs 204, 206, and 208 in FIG. 2A) is in communication with an AP 604 (e.g., one of APs 212, 214, 216, and 226 in FIG. 2A). In some embodiments, client device 602 and AP 604 communicate in the 2G, 5G and 6G bands. In some embodiments, client device 602 and AP 604 communicate on various channels across a connection established in association and authentication operations. Client device 602 and AP 604 perform a discovery operation, an authorization and association operation, and a security and power management operation in some embodiments.

In some embodiments, AP 604 provides a disassociation frame over the connection in an operation 620. The disassociation frame can be frame 500 (FIG. 5) with an appended neighbor report 504 in some embodiments. In some embodiments, AP 604 provides a deauthentication frame with the neighbor report in operation 620. In an operation 630, client device 602 starts a scanning operation using the neighbor report which contains reason code 502 and information about an AP 606. The scanning operation identifies an AP 606. Operations 320, 330 and 340 can reduce the time to switch to a new AP (e.g., AP 306) from 2 seconds to as low as 20 milliseconds in some embodiments.

In an operation 640, client device 602 selects a target AP (e.g., AP 306) using the information (e.g., list of AP targets) in disassociation or deauthentication frame. Client device 602 establishes a connection with AP 306 using an authentication and association operation in some embodiments. Operations 320, 330 and 340 can reduce the time to switch to a new AP from 2 seconds to as low as 20 milliseconds in some embodiments.

Client device 602 switches to a different network (e.g., from WiFi to LTE) without waiting or attempting to find other AP targets in operation 330 in response to information indicating a single AP environment. In multi AP environment, AP 604 sends information indicating a multi AP environment in operation 342 and client device 602 seeks other APs in same type of network before switching to a different type of network in operation 330.

It should be noted that certain passages of this disclosure can reference terms such as "first" and "second" in connection with subsets of frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beam formers and/or beam formees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code. Circuitry may refer to any electronic circuits or circuits.

While the foregoing written description of the methods and systems enables one of ordinary skill to make and use embodiments thereof, those of ordinary skill will understand and appreciate the existence of variations, combinations, and equivalents of the specific embodiment, method, and examples herein. For example, specific values for bandwidths, channels and sub bands discussed above are exemplary. The present methods and systems should therefore not be limited by the above described embodiments, methods, and examples, but by all embodiments and methods within the scope and spirit of the disclosure.

## Claims

1. A first device, comprising:
a circuit configured to provide at least one frame across a connection to a second device in response to a pending failure, the frame comprising data indicating at least one target access point for the second device.

2. The first device of claim 1, wherein the frame is provided according to an 802.11 protocol and the connection is established by using an association or authentication operation.

3. The first device of claim 1 or claim 2,
wherein the frame comprises a neighbor report response frame; and/or
wherein the frame comprises an unsolicited neighbor report response frame.

4. The first device of any one of the preceding claims,
wherein the frame comprises a basic service set transition management request frame; and/or
wherein the frame comprises an unsolicited basic service set transition management request frame.

5. The first device of any one of the preceding claims, wherein the circuit is configured to provide an indication of a multi AP or single AP environment across the connection to the second device in response to the pending failure.

6. The first device of any one of the preceding claims, comprising at least one of the following features (A) to (C):
(A) wherein the pending failure is determined in response to a bit error rate, a power fluctuation or droop, or a temperature;
(B) wherein the pending failure is determined in response to a temperature increase;
(C) wherein the first device is part of an access point.

7. An access point, comprising:
a circuit configured to provide an indication of a multi access point or single access point environment across a connection to a client device in response to a pending failure.

8. The access point of claim 7, wherein the circuit is configured to provide at least one frame across the connection to the client device in response to the pending failure, the frame comprising data indicating at least one target access point for the client device.

9. The access point of claim 8, wherein the frame is a broadcast frame; in particular wherein the broadcast frame is provided as part of a handoff operation.

10. The access point of any one of claims 7 to 9, wherein the indication is provided according to an 802.11 protocol and the connection is established by using an association or authentication operation.

11. A method, comprising:
determining a pending failure in a first device; and
providing at least one frame across a connection from the first device to a second device in response to the pending failure, the frame comprising data indicating at least one target device for the second device.

12. The method of claim 11, further comprising:
providing an indication of a multi access point or single access point environment across the connection to the second device in response to the pending failure.

13. The method of claim 11 or claim 12, further comprising:
selecting the target device for association with the second device.

14. The method of claim 13, further comprising:
associating with the target device.

15. The method of any one of claims 11 to 14, further comprising:
providing an indication of a multi access point or single access point environment across the connection to the second device in response to the pending failure, where the connection is in an 802.11 network; and
associating with a node in a cellular network if the indication indicates the single access point environment.
